# EUROPEAN PATENT SPECIFICATION

(11) **EP 3 340 333 B1**
(45) Date of publication and mention of the grant of the patent: **16.09.2020**
(21) Application number: 16868834.9
(22) Date of filing: 18.11.2016
(51) Int. Cl.: H01M 2/02, H01M 2/10, H01M 10/052, H01M 10/058

(54) **CURVED BATTERY CELL HAVING LESS STRUCTURE STRAIN AND METHOD FOR MANUFACTURING THE SAME**
GEKRÜMMTE BATTERIEZELLE MIT WENIGER STRUKTURELLER VERFORMUNG UND VERFAHREN ZUR HERSTELLUNG DAVON
PILE COURBÉE À DÉFORMATION STRUCTURALE RÉDUITE ET SON PROCÉDÉ DE FABRICATION

(30) Priority: 23.11.2015 KR 20150163991
(43) Date of publication of application: 27.06.2018
(73) Proprietor: LG Chem, Ltd., Seoul 07336 (KR)
(72) Inventor: CHO, Won Bin, Daejeon 34122 (KR); WANG, Zisheng, Daejeon 34122 (KR); LEE, Jin Woo, Daejeon 34122 (KR); JUNG, Ji Sub, Daejeon 34122 (KR); CHOO, Hyun Jae, Daejeon 34122 (KR)
(74) Representative: Plasseraud IP
(86) International application number: PCT/KR2016/013318
(87) International publication number: WO 2017/090937

(56) References cited:
- KR-A- 20150 049 261
- KR-A- 20150 089 991
- KR-B1- 100 553 753
- KR-B1- 101 161 136
- US-A1- 2011 117 394
- US-A1- 2013 108 907
- US-A1- 2014 093 762

## Description

### [Technical Field]

This application claims the benefit of priority based on Korean Patent Application No. 10-2015-0163991 filed on November. 23, 2015.

The present invention relates to a curved battery cell having a less structure strain and a method for manufacturing the same.

### [Background]

As technology development and demand for mobile devices have increased, there has been a rapid increase in the demand for secondary batteries as an energy source. Many researches have been conducted on a lithium secondary battery cell with high energy density and discharge voltage among the secondary batteries. Here, the lithium secondary battery cell has been commercially available to be widely used.

Typically, a demand for a prismatic secondary battery cell and a pouch type secondary battery cell that have a thin thickness in terms of a shape of the battery cell and may be applied to products such as a mobile phone has been increased, and a demand for lithium secondary batteries such as a lithium ion battery and a lithium ion polymer battery that have high energy density, discharge voltage, and output stability in terms of a material has been increased.

Among those, the pouch type battery cell is a secondary battery cell having a structure in which an electrode assembly and an electrolyte solution are embedded in a pouch-like laminate sheet capable of housing an electrode assembly and has a high energy density per unit weight, is cheap, and easily strains its own shape.

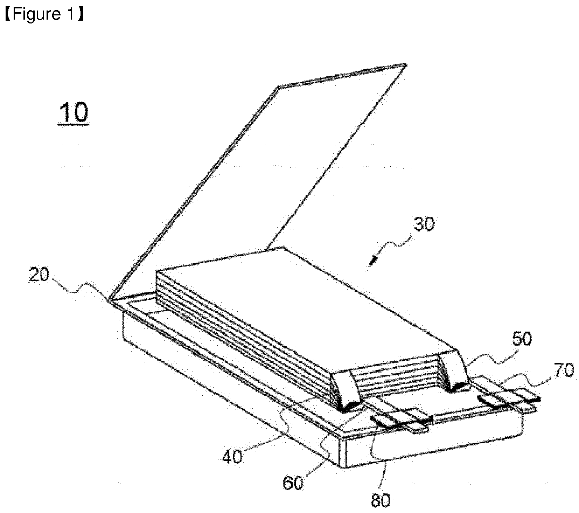

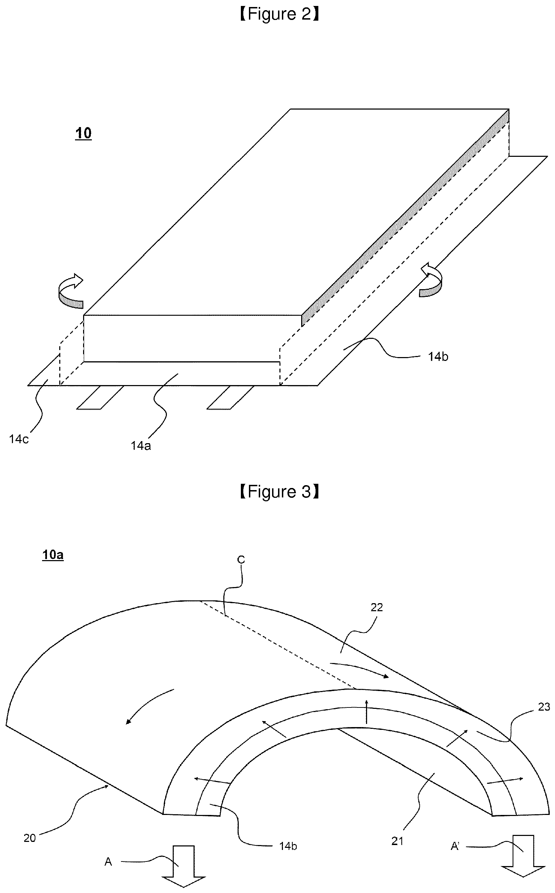

An exemplary structure of the pouch type battery cell is illustrated in FIGS. 1 and 2.

Referring to FIGS. 1 and 2, the battery cell 10 has a structure in which an electrode assembly 30 including a cathode, an anode, and a separator disposed therebetween is embedded in a cell case 20 together with an electrolyte solution, and outer circumferential sides 14a, 14b, and 14c, which are outer circumferential ends of the cell case 20, are sealed while electrode leads 60 and 70 connected to electrode taps 40 and 50 of the electrode assembly protrude to an outside of the cell case 20.

On the other hand, in recent years, since the design of the device itself is a very important factor in a product selection of consumers, various types of designs are developed beyond the existing planar design considering productivity and the like. For example, devices such as a mobile phone and a laptop may be designed to have a predetermined curved surface for an ergonomic design, and a battery cell is also designed to meet this design.

For example, as many designs having a curved surface formed on an outer surface have been developed, a battery cell having a curved surface by bending the corresponding part so as to be stably mounted on the device having the design has been developed. FIG. 3 schematically illustrates the pouch type battery cell having the curved structure.

Referring to FIG. 3, in the battery cell 10a, the electrode assembly 30 and the cell case 20 has a structure in which both ends at positions opposite to each other are curved together in the same direction so that the curved surface is formed on the outer surface of the battery cell, and the outer circumferential side 14b adheres to an outer surface 23 of the cell case 20 while being curved in the electrode assembly direction.

However, the outer circumferential side 14b of the pouch type cell case 20 is fused and bonded by heat, and therefore has less elastic strains such as stretching and drawing unlike other parts of the cell case 20, and a tension applied when the cell case 20 is curved is not alleviated at the outer circumferential side 14b by the stretching or the drawing.

In particular, since the tension is applied to the outer circumferential side 14b, which is curved and adheres in a direction of a side surface 23 of the cell case 20, in substantially opposite directions to curved directions A and A', the outer circumferential side 14b has a strong tendency to be restored to an original shape. For this reason, there is a problem in that the curved surface of the battery cell 10a is not maintained while the electrode assembly 30 and the cell case 20 are also strained and restored to their original shapes.

In addition, the tension applied to the outer circumferential side 14b strains the external circumferential side 14b to release the sealed state, or a strong external force is applied to end parts of the cell case 20 and the electrode assembly 30, which is a cause of straining the shapes thereof.

Therefore, a need for the battery cell capable of solving the above-mentioned problem and being curved to form the curved surface is increased.

The above information disclosed in this Background section is only for enhancement of understanding of the background of the invention and therefore it may contain information that does not form the prior art that is already known in this country to a person of ordinary skill in the art.

US 2014/377617 and WO 2015/194909 disclose a cable-type secondary battery.

### [Technical Problem]

The present invention has been made to solve the above-mentioned problems of the prior art and the technical problems requested from the past

The present invention has been made in an effort to provide a battery cell having a special structure in which a structure strain little occurs even in a state in which a curved surface is formed, and a method for manufacturing the battery cell capable of solving negative factors such as deterioration which has a big effect on performance of the battery cell.

### [Technical Solution]

The invention is set out in the appended claims. An exemplary embodiment of the present invention provides a battery cell.

The battery cell has a structure in which outer circumferential sides of a cell case are sealed by heat fusion in a state in which an electrode assembly including a cathode, an anode, and a separator is housed in a cell case together with an electrolyte solution.

The electrode assembly and the cell case have a structure in which both ends at positions opposite to each other are curved together in the same direction so that a curved surface is formed on an outer surface of the battery cell.

At least one of the heat-fused outer circumferential sides of the cell case is curved to adhere to a curved surface while forming an inner surface.

That is, in the battery cell according to the exemplary embodiment of the present invention, the outer circumferential side is curved and adheres to a part of the cell case to which a relatively lower tension is applied, and therefore the tension applied when the cell case is curved or in the curved state is little applied to the outer circumferential side.

As a result, the phenomenon that the sealed state of the outer circumferential side is released or the outer circumferential side is restored to an original shape by a reaction to the tension does not occur, and therefore the structure of the battery cell according to the exemplary embodiment of the present invention is little strained in the state in which the curved surface is formed.

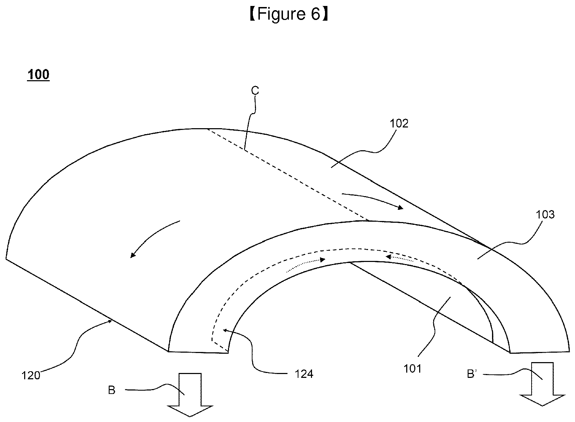

To describe in more detail this, FIGS. 1 to 3 showing the battery cell according to the related art and FIG. 6 showing the battery cell according to the exemplary embodiment of the present invention are compared and described.

Generally, in a battery cell 10a curved to have a curved surface, a tension is applied in curved directions A and A', and the tension is equally applied to an electrode assembly as well as a cell case 20. Describing this based on the cell case 20, the tension generates the strong tension on the outer curved surface 22 opposite to the curved direction and the tension applied to the cell case 22 is applied in an end direction from a central part C of the battery cell 10a.

Similarly, the tension is applied in the end direction from the central part C of the battery cell 10 even on the side surface 23 of the cell case 20 on which the outer circumferential side 14b is formed, and at the same time the tension is applied to the outer circumferential side 14b in a fan-shaped direction corresponding to the warpage. The tension in the fan-shaped direction may be applied in opposite directions to the curved directions A and A' or vertically.

As such, since the tension as a resistance against the warpage is applied to the cell case 20, a part of the cell case 20 may be stretched corresponding to the tension.

Meanwhile, in a pouch type battery cell 10, as illustrated in FIG. 2, the outer circumferential sides 14c and 14b need to be curved in the electrode assembly direction to reduce an area of the battery cell 10 while preventing moisture from being infiltrated through the heat-fused outer circumferential sides 14c and 14b.

However, as described above, the outer circumferential sides 14c and 14b are fused and bonded by heat, and therefore have less elastic strains such as stretching and drawing unlike other parts of the cell case 20. Therefore, the heat-fused outer circumferential sides 14c and 14b have a strong tendency to be restored to an original shape by a reaction to the tension.

In addition, as illustrated in FIG. 3, the tension may be applied to the outer circumferential side 14b in the fan-shaped direction corresponding to the warpage if the outer circumferential side 14b adheres in the side direction, the sealed state of the outer circumferential side 14b may be released by the tension since the tension is applied in the opposite direction to the curved direction or vertically, and the outer circumferential side 14b may be broken when the tension is applied stronger. Unlike FIG. 3, the problem occurs even when the outer circumferential side is curved and adheres in the direction of the outer curved surface 22 which is an opposite surface to the curved direction.

That is, the structure of the battery cell of FIGS. 1 to 3 has a problem in that the electrode assembly and the cell case are easily strained and restored to the original shape by the heat-fused outer circumferential side and the sealing of the cell case may be released while the external circumferential side is damaged.

In addition, since the phenomenon that the outer circumferential side is restored to the original shape continuously affects the cell case and the electrode assembly, there is a problem in that the structure is strained even in the state in which the curved surface is formed and therefore the battery cell is not maintained in the desired form.

Meanwhile, referring to FIG. 6, since a force is applied from an end part of the battery cell 100 to an inner surface 101 corresponding to curved directions B and B' in a direction of a central part C, the tension is little generated on the cell case and the electrode assembly of the part.

In the battery cell 100 according to the exemplary embodiment of the present invention, the inwardly curved surface 101 having a relatively very lower tension adheres to the heat-fused outer circumferential side 124, and therefore the tension is not generated on the outer circumferential side 124 unlike the battery cell illustrated in FIGS. 1 to 3.

As such, in the battery cell 100 according to the exemplary embodiment of the present invention, since the tension is not formed on the outer circumferential side 124, the phenomenon that the outer circumferential side is restored to the original shape by the reaction thereto does not occur, such that the structure of the battery cell 100 is not strained.

In addition, since the possibility that the sealed state of the outer circumferential side 124 is released or damaged is very low, the battery cell 100 according to the exemplary embodiment of the present invention has the very high structural stability nevertheless even though it has the curved surface structure.

As described above, the battery cell according to the exemplary embodiment of the present invention has the curved structure so that the curved surface is formed on the outer surface, and at the same time the special structure in which the curved structure of the heat-fused outer circumferential side is strained, and the detailed structures and configurations of the battery cell will be described in more detail with reference to the following non-restrictive examples.

In one detailed example, the cell case includes:
a first surface forming an outer surface of a battery cell, a second surface which is an opposite surface to the first surface, and side surfaces between the first surface and the second surface; and
outer circumferential sides extending outward from the side surfaces and the second surface for heat-fusion sealing,
wherein the electrode assembly and the cell case may be curved in a direction of the second surface and at least one of the outer circumferential sides may be curved to adhere to the second surface.

In some cases, the cell case having the structure may further include a member for reinforcing mechanical rigidity thereof. In detail, the cell case has the reinforcing member added on the second surface to prevent the curved shape of the electrode assembly from being changed.

The reinforcing member may be curved in the direction of the second surface together with the cell case.

In addition, the reinforcing member is additionally added on at least one outer circumferential side extending from the second surface.

On the outer circumferential side curved to adhere to the second surface, the reinforcing member may be curved in the direction of the second surface together with the outer circumferential side.

In the battery cell having the curved shape, a curvature radius R may be changed due to a shrinkage and an expansion of a cathode plate and an anode plate upon charging and discharging. In particular, the concavely curved second surface is an area applied with a considerable stress upon the manufacturing of the battery cell and the battery cell has a tendency to reduce the shrinkage stress by expanding the concave surface upon the charging.

At this time, the reinforcing member may suppress the concave second surface from being expanded to maintain the shape of the battery cell.

The reinforcing member may be attached to the second surface of the cell case due to an adhesive or the like, and may be polymer resins such as polypropylene, polyethyleneterephthalate, polyimide, and polyphenylene sulfide but is not limited thereto.

The outer circumferential sides includes: a first outer circumferential side on which at least one electrode terminal of a pair of electrode terminals is located;
a pair of second outer circumferential sides extending in parallel to each other from both end parts of the first outer circumferential side; and
a third outer circumferential side extending between the second outer circumferential sides in parallel to the first outer circumferential side,
wherein the second outer circumferential sides may have a structure curved together with the second surface while being curved to adhere to the second surface of the cell case.

That is, the second outer circumferential sides may form an inner surface of the battery cell while being curved together with the second surface and the inner surface may be a curved surface.

In the structure, the end parts of the electrode assembly corresponding to the first outer circumferential side and the third outer circumferential side of the cell case may be curved in the direction of the second surface of the cell case corresponding to the first outer circumferential side and the third outer circumferential side of the cell case.

In the structure, when both end parts of the electrode assembly and the cell case are curved in the direction of the second surface, the second outer circumferential sides adhering to the second surface have a structural merit in that a tension is not applied in an opposite direction to a direction in which the cell case is bent.

As described above, this is due to the fact that the force is delivered only to the second surface corresponding to the curved direction in a direction of the central part from the curved end part. The reason is that the force in the same direction is applied even to the second outer circumferential side adhering to the second surface but the tension is not applied in the opposite direction to the direction in which the cell case is bent.

According to the exemplary embodiment of the present invention, the cell case has a variable characteristic to be able to be easily curved in a state in which the cell case has the electrode assembly embedded therein. That is, the variable cell case can be strained by the external force in the state in which the cell case has the electrode assembly embedded therein.

The detailed structure of the variable cell case may be a pouch type case made up of a laminate sheet including a metal layer and a resin layer.

The laminate sheet may have a structure in which a resin outer layer having excellent durability is added to one surface (outer surface) of a metal barrier layer and a heat-fusibility resin sealant layer is added to the other surface (inner surface).

The resin outer layer needs to have the excellent durability against the external environment, and therefore needs to have tensile strength and weather resistance above a predetermined level. In this aspect, as the polymer resin of the resin outer layer, polyethylene terephthalate (PET) and an oriented nylon film may be used.

As the metal barrier layer, aluminum may be used to exert a function of improving a strength of the cell case as well as a function of preventing foreign matters such as gas and moisture from inflowing or leaking.

As the polymer resin of the resin sealant layer, a polyolefin-based resin which has heat fusibility (heat adhesion) and low moisture absorption to suppress an electrolyte solution from being infiltrated, and is not expanded or eroded may be preferably used, in detail, unstretched polypropylene (CPP) may be used.

Generally, since the polyolefin-based resin such as polypropylene has the low adhesion to metal, as a method for improving adhesion to a metal barrier layer, preferably, an adhesive layer may be additionally provided between the metal layer and the resin sealant layer to improve the adhesion and barrier characteristics. Examples of materials of the adhesive layer may include a composition including, for example, a urethane-based material, an acryl-based material, a thermoplastic elastomer, but the materials are not limited thereto.

The variable cell case has a structure in which the resin layers of the laminate sheet are heat-fused to each other while adhering to each other to face each other, and may seal the electrode assembly and the electrode solution from the outside. The outer circumferential sides may mean the outer circumferential part of the cell case bonded in the structure. In more detail, in the battery cell having the sealed structure in which the electrode assembly and the electrolyte solution are sealed while being embedded in the cell case, the outer circumferential sides may be the end part of the battery cell as viewed from a plane.

In one detailed example, the battery cell includes: a first curved surface formed by a second surface of the curved cell case and second outer circumferential sides adhering to the second surface;
a second curved surface formed by the first surface of the curved cell case;and
a pair of arched flat surfaces formed by side surfaces of the cell case as viewed from a plane,
wherein a tension applied to the cell case from the first curved surface is 5% to 70% lower than that applied to the cell case by the second curved surface and the flat surfaces

That is, in the battery cell according to the exemplary embodiment of the present invention, as described above, the first curved surface, to which the relatively lower tension is applied, is provided with the second outer circumferential side, and therefore like the related art, the phenomenon that the electrode assembly and the cell case is strained and restored to the original shape by the outer circumferential side little occurs.

The battery cell may have the structure in which the outer circumferential sides are sealed while the electrode terminals of the electrode assembly protrude in parallel through the first outer circumferential side or the structure in which the outer circumferential sides are sealed while the electrode terminals each protrude through the first outer circumferential side and the third outer circumferential side, but is not limited only to the structures.

According to the exemplary embodiment of the present invention, the battery cell may be curved to have various curvature radii (R) according to the desired shape, but if the curvature radius R is too small, a strain such as a distortion may occur while the stress is concentrated on the central part of the battery cell, whereas if the curvature radius is too large, it is difficult to control the curvature radius and the battery cell may be restored to the original state, that is, the flat state again.

Therefore, the battery cell may have a structure in which the electrode assembly and the cell case are curved together in the curvature radius R range of 10R to 200R. In the battery cell, the curvature radius R is a radius of a circle tangential on the curved line forming a curved surface. Here, the fact that the curvature radius is large means that the curved degree is small, and the fact that the curvature radius is small means that the curved degree is large. According to the exemplary embodiment of the present invention, a unit of the curvature radius R may be millimeter or centimeter.

In one detailed example, the curvature radius R may be 50R to 200R, and the unit of the curvature radius R may be millimeter.

In another detailed example, the curvature radius R may be 20R to 50R, and the unit of the curvature radius R may be centimeter.

The curvature radius R may be an average value of the first curvature radius R1 on the first curved surface and the second curvature radius R2 on the second curved surface, with respect to the vertical cross section of the battery cell.

The first curvature radius R1 is a radius of a circle tangential on the curved line of the first curved surface with respect to the vertical cross section of the battery cell.

The radii of the circle at all points on the curved line of the first curved surface may be finely different, which corresponds to an error range in the manufacturing process and thus may have substantially the same curvature radius. In detail, the first curvature radius R1 may be an average value of the radii tangential on the curved line of the first curved surface.

In some cases, in the curved line of the first curved surface, the curvature radii at the central part and the end part may be configured differently in the range of 10% to 50%.

At this time, the first curvature radius R1 may be the average value of the radii tangential on the curved line of the first curved surface. However, in the secondary battery having the structure in which the curvature radius is small, that is, the curved state is a relatively large, the curved state may tend to be restored during the repeated charging and discharging. In this case, polar plates adjacent to the end parts of the cell case are applied with a considerable force while being pressed by the cell case and thus penetrate through the separator to cause a short circuit.

Therefore, in the structure, in the curved line of the first curved surface, the curvature radius of the end part may be a larger structure than that of the central part.

The second curvature radius R2 may be finely different from the first curvature radius R1, which corresponds to the error range in the manufacturing process and may be considered to have substantially the same curvature radius. According to the exemplary embodiment of the present invention, the curvature radius R of the battery cell is defined as the average of the first curvature radius R1 on the first curved surface and the second curvature radius R2 on the second curved surface.

In addition, the second curvature radius R2 may be the radius of the circle on the curved line of the second curved surface with respect to the vertical cross section of the battery cell. Similar to the first curvature radius R1, the radii of the circle at all the points on the curved line of the second curved surface may be finely different, which corresponds to the error range in the manufacturing process and may be considered to have substantially the same curvature radius. In detail, the second curvature radius R2 may be the average of the radii tangential on the curved line of the second curved surface.

In some cases, in the curved line of the second curved surface, the curvature radii at the central part and the end part may be configured differently in the range of 10% to 50%. At this time, the second curvature radius R2 may be the average value of the radii tangential on the curved line of the second curved surface. In the structure, in the curved line of the second curved surface, the curvature radius of the end part may be a larger structure than that of the central part.

That is, the first curvature radius and the second curvature radius may be substantially the same, and at the same time, the curvature radii at all points on the first curved surface and the second curved surface may be substantially the same.

On the other hand, the first curvature radius and the second curvature radius may be substantially the same, but the curvature radius at the end parts on the first curved surface and the second curved surface may be formed larger than that at the central part. In the structure, when the active materials applied to the polar plate are repeatedly expanded and shrunk during the repeated charging and discharging of the battery cell, the end part compares with both end parts having the smaller curvature radius under the same condition to make the strain due to the restoration relatively small, such that the force applied to the end part of the electrode assembly is small. Therefore, there is a merit in that the occurrence possibility of the short circuit of the polar plate is low.

Meanwhile, in one detailed example, the electrode assembly and the cell case may be curved to be symmetrical with each other with respect to the center of the battery cell.

Unlike this, the electrode assembly and the cell case may be curved to be asymmetrical with each other with respect to the center of the battery cell.

Here, the center of the battery cell means a horizontal axis that is parallel with the first outer circumferential side and the third outer circumferential side of the cell case and passes through the central part of the battery cell.

According to the exemplary embodiment of the present invention, the electrode assembly may have a stacked structure in the state in which the separator is interposed between the plurality of cathodes and anodes or may be a structure in which the separator is spiral-wound in the state in which the plurality of unit cells stacked in the state in which the separator is interposed between at least one cathode and the anode are arranged in the separator.

In addition, the kind of the battery cell is not particularly limited, but the detailed examples thereof may include lithium secondary batteries such as a lithium ion (Li-ion) secondary battery, a lithium polymer (Li-polymer) secondary battery, and a lithium ion polymer (Li-ion polymer) secondary battery that have high energy density, discharge voltage, output stability and the like.

Generally, the lithium secondary battery includes a cathode, an anode, a separator, a lithium salt containing non-aqueous electrolyte.

The cathode is prepared, for example, by coating and drying a mixture of a positive active material, a conductive material and a binder on a cathode current collector, and / or an extension current collector, and if necessary, a filler may be further added to the mixture.

The cathode current collector and/or the extension current collector generally have a thickness of 3 to 500 micrometer. The cathode current collector and the extension current collector are not particularly limited as long as they have high conductivity without causing a chemical change of the battery. For example, stainless steel, aluminum, nickel, titanium, baked carbon, or carbon, nickel, titanium, silver and the like used for performing surface treatment on aluminum or stainless steel surface may be used. The cathode current collector and the extension current collector may form fine ruggedness on the surface thereof to increase an adhesive of a cathode active material and may have various forms such as a film, a sheet, a foil, a net, a porous body, a foaming body, a non-woven fabric body, and the like.

The cathode active material may be a layered compound such as lithium cobalt oxide (LiCoO₂) or lithium nickel oxide (LiNiO₂) or a compound substituted into one or more transition metal; lithium manganese oxides such as chemical formula Li₁₊ₓMn₂₋ₓO₄ (where x is 0 to 0.33), LiMnO₃, LiMn₂O₃, LiMnO₂ and the like; lithium copper oxide (Li₂CuO₂); vanadium oxides such as LiV₃O₈, LiFe₃O₄, V₂O₅, and Cu₂V₂O₇; Ni-site type lithium nickel oxide represented by the chemical formula LiNi₁.ₓMₓO₂ (where M = Co, Mn, Al, Cu, Fe, Mg, B or Ga and x = 0.01 to 0.3); lithium manganese composite oxide represented by the chemical formula LiMn₂₋ₓMₓO₂ (where M = Co, Ni, Fe, Cr, Zn or Ta and x = 0.01 to 0.1) or Li₂Mn₃MO₈ (where M = Fe, Co, Ni, Cu or Zn); LiMn₂O₄ in which a part of Li in the chemical formula is substituted into alkaline earth metal ion; a disulfide compound; Fe₂ (MoO₄)₃, and the like, but not limited thereto.

The conductive material is generally added as 1 to 30 wt% with respect to the entire weight of mixture including the cathode active material. Such a conductive material is not particularly limited as long as it has conductivity without causing the chemical change in the battery, and examples thereof may include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; conductive materials such as polyphenylene derivatives and the like.

The binder is a component that assists in bonding between the active material and the conductive material and bonding to the current collector, and is usually added in an amount of 1 to 30 wt% with respect to the total weight of the mixture including the cathode active material. Examples of the binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene , polypropylene, ethylene-propylene-diene terpolymer (EPDM), sulfonated EPDM, styrene butylene rubber, fluorine rubber, various copolymers and the like.

The filler is optionally used as a component for suppressing the expansion of the cathode, and is not particularly limited as long as it is a fibrous material without causing a chemical change in the battery. Examples of the filler may include olefin-based polymers such as polyethylene and polypropylene; fibrous materials such as glass fiber, carbon fiber and the like.

The anode is manufactured by coating and drying the anode active material on the anode current collector and / or the extension current collector and optionally, may further include components as described above as needed.

The anode current collector and/or the extension current collector generally have a thickness of 3 to 500 micrometer. The anode current collector and/or the extension current collector are not particularly limited as long as they have the conductivity without causing the chemical change of the battery. For example, copper, stainless steel, aluminum, nickel, titanium, baked carbon, or carbon, nickel, titanium, silver or the like used for performing surface treatment on copper or stainless steel, an aluminum-cadmium alloy and the like may be used. In addition, similar to the cathode current collector, the fine ruggedness may be formed on the surface to reinforce the adhesion of the anode active material, and various forms such as the film, the sheet, the foil, the net, the porous body, the foaming body, and the non-woven fabric body may be used.

Examples of the anode electrode active material may include carbon such as non-graphitized carbon and graphite-based carbon; metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements of groups I, II, and III in a periodic table, halogen; 0 < x ≤ 1; 1 ≤ y ≤ 3; 1 ≤ z ≤ 8); lithium metal; lithium alloy; silicon-based alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni-based materials and the like.

The separator is interposed between the cathode and the anode, and an insulating thin membrane having high ion permeability and mechanical strength is used. A pore diameter of the separator is generally 0.01 to 10 micrometer, and a thickness is generally 5 to 300 micrometer. As the separator, a sheet, a non-woven fabric and the like which are made of, for example, an olefin-based polymer such as chemical resistance and hydrophobic polypropylene, glass fiber, polyethylene, or the like are used. As the electrolyte, when a solid electrolyte such as the polymer is used, the solid electrolyte may be used as the separator.

The electrolyte solution may be a lithium salt containing non-aqueous electrolyte solution, and may include the non-aqueous electrolyte solution and the lithium salt. As the non-aqueous electrolyte solution, a non-aqueous organic solvent, an organic solid electrolyte, an inorganic solid electrolyte and the like are used, but it is not limited thereto.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butylolactone, 1,2-dimethoxyethane, tetrahydroxy franc, 2-methyltetrahydrofuran, dimethylsulfoxide, 1,3-dioxolane, formamide, dimethylformamide, dioxolane, acetonitrile, nitromethane, methyl formate, methyl acetate, triester phosphate, trimethoxymethane, dioxolane derivatives, sulfolane, methyl sulfolane, 1,3-dimethyl-2-imidazolidinone, propylene carbonate derivatives, tetrahydrofuran derivatives, ether, methyl pyrophosphate, and ethyl propionate may be used.

As the organic solid electrolyte, for example, a polymer which includes a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, an ionic dissociation group and the like may be used.

As the inorganic solid electrolyte, for example, nitride, halide, sulfate and the like of Li such as Li₃N, Lil, Li₅NI₂, Li₃N-Lil-LiOH, LiSiO₄, LiSiO₄-Lil-LiOH, Li₂SiS₃, Li₄SiO₄, Li₄SiO₄-LiI-LiOH, and Li₃PO₄-Li₂S-SiS₂ may be used.

The lithium salt is a material that can be well dissolved in the non-aqueous electrolyte, and examples thereof may include LiCI, LiBr, Lil, LiClO₄, LiBF₄, UB₁₀CI₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloro borane lithium, lower aliphatic carbonic acid lithium, 4 phenyl boric acid lithium, imide and the like.

In addition, for the purpose of improving charge / discharge characteristics, flame retardancy and the like, in the non-aqueous electrolyte solution, for example, pyridine, triethylphosphite, triethanolamine, cyclic ether, ethylene diamine, n-glyme, hexa phosphoric acid tri amide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride and the like may be added. In some cases, a halogen-containing solvent such as carbon tetrachloride or ethylene trifluoride may be further included to impart nonflammability, carbon dioxide gas may be further included to improve high temperature storage characteristics, fluoro-ethylene carbonate (FEC), propene sultone (PRS), and the like may be further included.

In one detailed example, a lithium salt containing non-aqueous electrolyte may be prepared by adding lithium salt such as LiPF₆, LiCIO₄, LiBF₄, and LiN (SO₂CF₃)₂ to a mixed solvent of cyclic carbonate of EC or PC which is a high dielectric constant solvent and linear carbonate of DEC, DMC or EMC which is a low viscosity solvent.

An exemplary embodiment of the present invention provides a method for manufacturing a battery cell.

In detail, the method according to the exemplary embodiment of the present invention includes:
(a) preparing a plate-shaped cell by mounting an electrode assembly on a variable cell case and heat fusing outer circumferential sides of the cell case in a state in which an electrolyte solution is injected;
(b) horizontally bending and adhering a pair of second outer circumferential sides opposite to each other among the outer circumferential sides to a second surface of the cell case;
(c) mounting and pressing the plate-shaped cell in upper and lower separated jigs in which a shape of the battery cell having a curvature radius r smaller than a curvature radius R is stamped; and
(d) opening the jig to extract the battery cell and then partially restoring a curved state to fix the battery cell for a predetermined time so that the curvature radius R is formed.

Generally, the method for manufacturing a curved batter cell includes applying heat and pressure to an electrode assembly and bending the electrode assembly, and then sealing a pouch type cell case easily strained to correspond to the curved shape.

However, the manufacturing method may greatly deteriorate the performance of the battery cell as follows.

First, heat is directly applied to the electrode assembly and therefore the deterioration in the battery cell may be severe. The deterioration strains the structure of the electrode or causes the decomposition of the active materials forming the electrode, which is a cause of deteriorating the performance of the battery cell.

Second, even the cell case is strained like the electrode assembly and therefore the burden of the manufacturing process is caused, and when the electrolyte solution is injected and charged while the curved electrode assembly is mounted in the cell case, the stress included in the electrode assembly is likely to be restored by the plastic action of the electrolyte solution during the curved process, such that there is the problem in that the possibility of the short circuit is increased while the end part of the electrode assembly is pressed by the inner surface of the cell case.

On the other hand, the method for manufacturing a battery cell according to the exemplary embodiment of the present invention does not form the curved surface by pressing only the electrode assembly but forms the curved surface by the post-processing process in the state in which the electrode assembly is mounted in the cell case and then the electrolyte solution is injected and the initial charging and discharging are performed. Therefore, the strain may be relatively reduced and the heat is not directly applied to the electrode assembly, such that the deterioration may be minimized.

In addition, when the curved surface is formed by pressing the electrode assembly itself, the cell case for housing the electrode assembly needs to form the curved surface again, such that it is not easy to form the curved surface and the process is complex. However, according to the exemplary embodiment of the present invention, the cell case is also pressed together with the electrode assembly to be bent, and therefore the process efficiency is excellent.

In addition, the electrolyte solution of the battery cell during the pressing process acts as a kind of plasticizer while the electrode assembly is curved to minimize the occurrence of the stress occurring by the interface frictional force of the polar plates, such that the tendency to restore the curved electrode assembly to the original state due to the stress during the repeated charging and discharging process can be greatly reduced.

To facilitate the integrated molding, the cell case is made of the materials having the predetermined changeability which may be easily strained and curved during the pressing process (b).

The process (c) is the process of forming the curved surface on the outer surface of the battery cell and is the process of pressing the battery cell using the jig (e.g., concave jig) having the shape corresponding to the shape of the desired curved surface and the jig (e.g., convex jig) having the shape corresponding thereto.

In some cases, the heat treatment may be performed during the pressing process. In this case, the heating method is not particularly limited. For example, the heater is installed in the jig to perform the heat simultaneously with the pressing.

The pressure and temperature applied during the pressing process are enough not to cause the deterioration in the electrode assembly in the battery cell and is preferably performed at 10 to 90° C at a pressure of 150 to 500 kgF. However, it is preferable to perform the pressing reaction at a room temperature without the separate heating process to minimize the deterioration in the electrode assembly and the electrolyte solution due to the heating.

The stress occurring in the battery cell during the pressing process (c) is solved to stably maintain the shape of the curved surface so that the desired curvature radius R may be formed during the fixing process (d).

The present invention provides the battery cell in which the predetermined curved surface is formed, the battery pack having the structure embedded in the pack case curved in the same shape as the battery cell, and the device using the same as the power supply.

In detail, the battery pack may be used as the power supply for the device which is the mobile electronic device or the wearable electronic device.

### [Description of the Drawings]

FIGS. 1 to 3 are schematic views of a battery cell and a curved battery cell according to the related art.
FIG. 4 is a schematic view of a battery cell according to an exemplary embodiment of the present invention.
FIG. 5 is a vertical cross-sectional view illustrating the battery cell illustrated in FIG. 4 and a structure in which the battery cell is bent.
FIG. 6 is a schematic view of the curved battery cell according to an exemplary embodiment of the present invention.
FIG. 7 is a vertical cross-sectional view of a curved battery cell according to another exemplary embodiment of the present invention.
FIG. 8 is a schematic view of a process of manufacturing a battery cell according to an exemplary embodiment of the present invention.
FIG. 9 is a perspective view of a battery pack including a battery cell having a curved surface according to an exemplary embodiment of the present invention.
FIG. 10 is a vertical cross-sectional view of a battery cell according to another exemplary embodiment of the present invention.

### [Detailed description of the Embodiments]

Hereinafter, the present invention will be described with reference to the drawings according to an exemplary embodiment of the present invention, which is to more easily understand the present invention, but the scope of the present invention is not limited thereto.

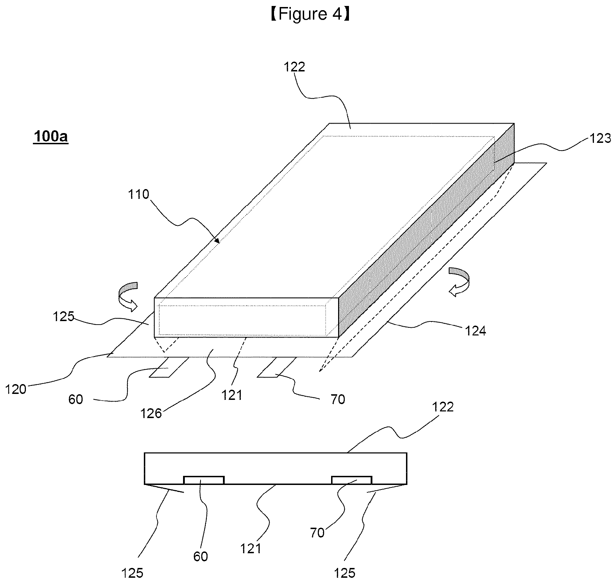

FIG. 4 is a schematic view of a structure of a battery cell 100a according to an exemplary embodiment of the present invention;
Referring to FIG. 4, the battery cell 100a has a structure in which outer circumferential sides 124, 125, and 126 of a cell case 120 are sealed by heat fusion in a state in which an electrode assembly 110 including a cathode, an anode, and a separator is housed in the cell case 120 together with an electrolyte solution, and is the same structure as the structure of the battery cell 100 of FIGS. 1 and 2. Therefore, the description of the overlapping configuration will be omitted.

The cell case 120 includes a first surface 122 forming an outer surface of the battery cell 100, a second surface 121 opposite to the first surface 122, and side surfaces 123 between the first surface 122 and the second surface 121.

The cell case 120 also includes the side surfaces 123 and outer circumferential sides 124, 125, and 126 which extend outward from the second surface 121.

The outer circumferential sides 124, 125, and 126 includes a first outer circumferential side 126 on which at least one of a pair of electrode terminals 60 and 70 of the electrode assembly 110 is located, a pair of second outer circumferential sides 124 and 125 extending in parallel to each other from both ends parts of the first outer circumferential side 126, and a third outer circumferential side (not shown) extending between end parts of the second outer circumferential sides 124 and 125 in parallel with the first outer circumferential side 126.

These outer circumferential sides 124, 125, and 126 are heat-fused, and the first outer circumferential side 126, the second outer circumferential sides 124 and 125, and the third outer circumferential side that are heat-fused form an end part of the battery cell 100.

As such, the second outer circumferential sides 124 and 125 of the outer circumferential sides 124, 125, and 126 which are heat-fused are curved in a direction of the electrode assembly 110 to prevent moisture from being infiltrated therethrough and reduce the area of the battery cell 100, in detail, curved to adhere to the second surface 121 of the cell case 120.

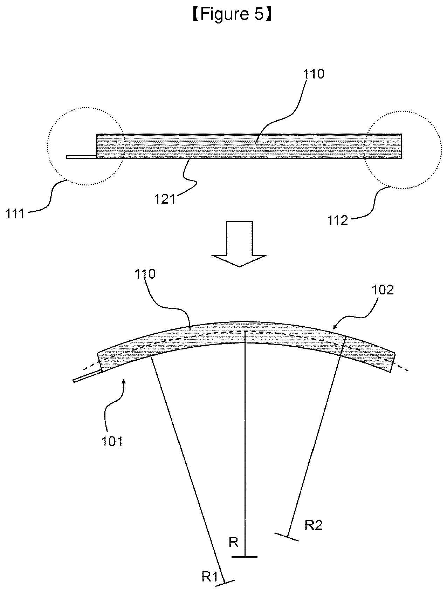

In this state, as illustrated in FIG. 5, in the battery cell 100, end parts 111 and 112 of the electrode assembly 110 corresponding to the first outer circumferential side 126 and the third outer circumferential side of the cell case 120 are curved in a direction of the second surface 121 of the cell case 120, and the cell case 120 is strained to the curved battery cell 100 while the first outer circumferential side 126 and the third outer circumferential side are curved in the same direction corresponding to the warpage of the electrode assembly 110.

As described above, the structure has the structural merit in that when both end parts of the electrode assembly 110 and the cell case 120 are curved in the direction of the second surface 121, a tension does not occur on the second outer circumferential sides 124 and 125 adhering to the second surface 121 in an opposite direction to the direction in which the cell case 120 is bent.

This is due to the fact that the force is delivered only to the second surface 121 of the cell case 120 from the end part of the battery cell 100 toward the central part. The reason is that the force in the same direction is applied even to the second outer circumferential sides 124 and 125 adhering to the second surface 121 but the tension is not applied in the opposite direction to the direction in which the cell case 120 is bent.

In connection with this, FIG. 6 is a schematic view of a curved battery cell according to an exemplary embodiment of the present invention.

Referring to FIG. 6 with FIGS. 4 and 5, the battery cell 100 includes a first curved surface 101 formed by a second surface 121 of a curved cell case 120 and the second outer circumferential sides 124 and 125 adhering to the second surface 121, a second curved surface 102 formed by a first surface 122 of the curved cell case 120, and a pair of arched flat surfaces 103 formed by side surfaces 123 of the cell case 120 as viewed from a plane.

The battery cell 100 is curved at a curvature radius R together with the electrode assembly 110 and the cell case 120, in which the curvature radius R is an average of a first curvature radius R1 on the first curved surface 101 and a second curvature radius R2 on the second curved surface 102.

In the battery cell 100, the electrode assembly 110 and the cell case 120 are parallel therewith between the first outer circumferential side 126 and the third outer circumferential side of the cell case 120 and are curved to be symmetrical with each other with respect to a horizontal axis C which passes through a center of the battery cell 100.

Meanwhile, in the battery cell 100, a tension is applied in curved directions B and B', and the tension is equally applied to the electrode assembly 110 as well as the cell case 120. The tension generates the strong tension on the outer curved surface 102 of the battery cell 100, in particular, the tension applied to the cell case 120 stretches a part of the cell case 120 while being applied in an end direction from the central part C of the battery cell 100.

In addition, the tension is applied in the end direction from the central part C of the battery cell 100 even on the flat surfaces 103 of the battery cell 100, and at the same time the tension is applied in a fan-shaped direction corresponding to the warpage, and the tension in the fan-shaped direction is applied in an opposite direction to the curved directions B and B' or vertically.

On the other hand, a force is delivered to the first curved surface 101 of the battery cell 100 in the direction of the central part C from the end part of the battery cell 100. For this reason, the tension is little applied to the first curved surface 101.

That is, the battery cell 100 according to the exemplary embodiment of the present invention includes the first curved surface 101 formed by a combination of the second outer circumferential sides 124 and 125 easily restored to the original shape by the tension with the second surface 121 of the cell case 120 on which the tension is little generated, and since the structure of the first curved surface 101 is a little strained by the combination, the phenomenon that the curved surfaces of the battery cell 100 are released despite the tension by the warpage or the structures of the second outer circumferential sides 124 and 125, the cell case 120, and the electrode assembly 110 are strained may be prevented.

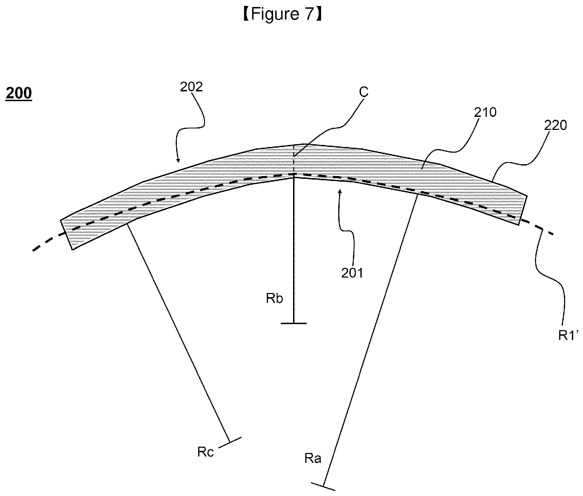

FIG. 7 illustrates a vertical cross-sectional view of a battery cell 200 according to another exemplary embodiment of the present invention.

Referring to FIG. 7, in the battery cell 200, an electrode assembly 210 and a cell case 220 are curved to be asymmetrical with each other with respect to the center C of the battery cell 100.

In detail, in the battery cell 200, a first curved surface 201 is configured of curved lines of different curvature radii Ra, Rb, and Rc, in detail, both parts of the first curved surface 201 with respect to the center C of the battery cell 200 have an asymmetrical structure in which they are curved at different curvature radii.

Here, a first curvature radius R1' of the first curved surface 201 is an average of the different curvature radii Ra, Rb, and Rc, which is substantially the same as the second curved surface 202.

Meanwhile, the tendency to restore the curved state in the structure in which the curvature radius is small, that is, the structure in which the curved state is relatively larger strongly appears, and when the curved state is restored, since end parts of the battery cell 200 are applied with a considerable force while polar plates of the electrode assembly 210 adjacent to the end parts are pressed by the cell case 220 and penetrate through a separator to be easily short-circuited, it is advantageous that the at least end parts of the battery cell 200 have the structure in which the curvature radius is relatively larger, that is, the structure in which the curved state is relatively smaller.

Therefore, the battery cell 200 has the structure in which the curvature radius Rc at the end part is larger than the curvature radius Rb at the center part, on the first curved surface 201 and the second curved surface 202.

In the structure, when the active materials applied to the polar plate are repeatedly expanded and shrunk during the repeated charging and discharging of the battery cell 200, the end part compares with both end parts having the smaller curvature radius under the same condition to make the strain due to the restoration relatively small, such that the force applied to the end part of the electrode assembly 210 is small, thereby reducing the possibility of the short-circuit of the polar plates described above.

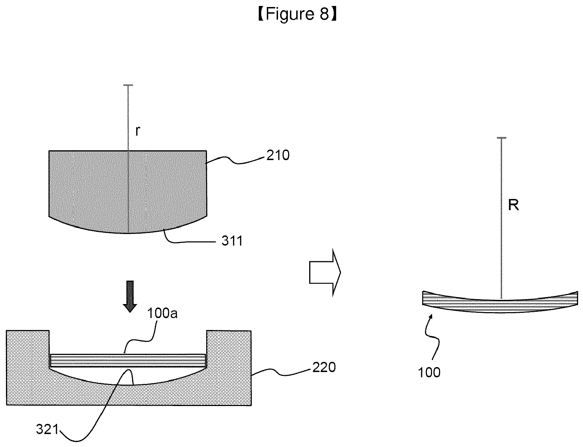

FIG. 8 schematically illustrates the process of manufacturing the battery cell 100 formed with the curved surface according to an exemplary embodiment of the present invention.

Referring to FIG. 8, the apparatus for forming the curved surface includes an upper jig 310 provided with a convex part 311 having a curvature radius r and a lower jig 320 provided with a concave part 321 having a curvature radius r so that the lower jig 320 may engage with the upper jig 310. In the battery cell 100a, the electro assembly is embedded in the variable cell case together with the electrolyte solution and is mounted on the concave part 321 of the lower jig 320 to form the curved surface.

If the upper jig 310 falls in the direction of the lower jig 320 to press the battery cell 100a, the curved surface corresponding to the shape of the upper jig 310 and the lower jig 320 is formed while the battery cell 100a is bent.

Therefore, unlike being directly hot-pressed on the electrode assembly as in the related art, the pressing process as the post-processing process is performed in the state in which the electrode assembly is housed in the variable cell case and the electrolyte solution is injected and the initial charging and discharging are performed, thereby minimizing the deterioration in the electrode assembly. In addition, the electrolyte solution in the cell case serves as a kind of plasticizer to minimize the stress occurring due to the interface friction force between the polar plates during the pressing process, such that the tendency to be restored due to the stress during the charging and discharging process of the battery cell 100 can be greatly reduced.

Meanwhile, the pressing process is preferably performed at room temperature, but a predetermined heat treatment process may be accompanied as needed. For this purpose, a heater (not shown) may be installed in the upper jig 310 and / or the lower jig 320.

After the pressing process, the jigs 310 and 320 are open to extract the battery cell 100, and are fixed for a predetermined time so that the curved state is partially restored to make the curvature radius R. Therefore, the stress applied to the battery cell 100 is solved by the pressing process, such that the curved surface can be stably maintained. The manufactured battery cell 100 has the shape in which both ends are curved upward together, and the curvature radius R thereof may be equal to or larger than the curvature radius r of the upper jig 310.

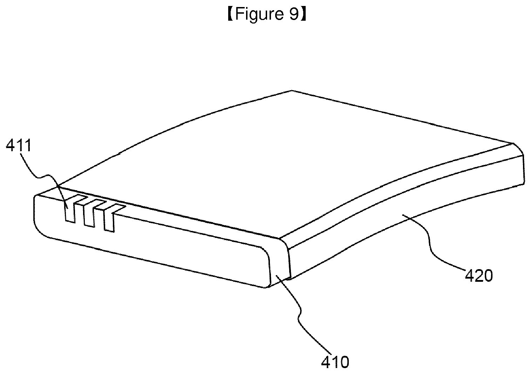

FIG. 9 schematically illustrates the battery pack in which the battery cell according to the exemplary embodiment of the present invention is mounted.

Referring to FIG. 9, the pack case of the battery pack 400 includes a pack case body 420 smoothly curved as the same shape as the battery cell to form the curved surface, an upper cap 410 mounted on an upper surface thereof, and a lower cap (not shown) mounted on a lower surface thereof. The upper cap 410 is provided with a groove part 411 so that external input and output terminals may protrude.

As described above, the battery pack 400 provided with the predetermined curved surface is mounted in the device designed to have various curved surface such as a mobile phone to efficiently use the internal space, thereby manufacturing the device having the adhering structure. Therefore, the device having various designs according to a consumer's taste can be developed, which may be contributed to diversification of products.

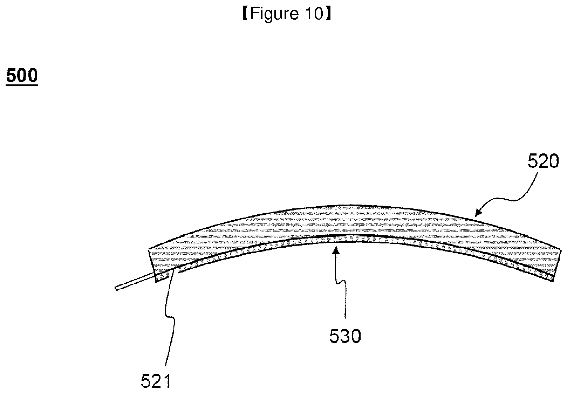

FIG. 10 illustrates a vertical cross-sectional view of a battery cell according to another exemplary embodiment of the present invention.

A structure of a battery cell 500 illustrated in FIG. 10 is similar to the battery cell described above with reference to FIGS. 4 to 6, but is different from the battery cell illustrated in FIGS. 4 to 6 in that a reinforcing member 530 is added on a second surface 521 of the cell case 520.

The reinforcing member 530 is curved in a direction of a second surface 521 together with a cell case 520 to prevent the curved shape of the battery cell 500 from being restored.

The exemplary embodiments of the present invention have been described with reference to the accompany drawings, but can be variously changed and modified by a person having ordinary skill based on the contents without departing from the scope of the present invention can on with certain exemplary embodiments.

### [Industrial Applicability]

As described above, in the battery cell according to the exemplary embodiment of the present invention, the outer circumferential side is curved and adheres to a part of the cell case to which a relatively lower tension is applied, and therefore the tension applied when the cell case is curved or in the curved state is little applied to the outer circumferential side. As a result, the phenomenon that the sealed state of the outer circumferential side is released or the outer circumferential side is restored to an original shape by a reaction of the tension does not occur, and therefore the structure of the battery cell according to the exemplary embodiment of the present invention is little strained in the state in which the curved surface is formed.

The method for manufacturing a battery cell according to the exemplary embodiment of the present invention does not form the curved surface by pressing only the electrode assembly but forms the curved surface by the post-processing process in the state in which the electrode assembly is mounted in the cell case and then the electrolyte solution is injected and the initial charging and discharging are performed. Therefore, the strain may be relatively small and the heat is directly applied to the electrode assembly, such that the deterioration may be minimized.

## Claims

1. A battery cell (100) having a structure in which outer circumferential sides (124, 125, 126) of a cell case are sealed by heat fusion in a state in which an electrode assembly (110) including a cathode, an anode, and a separator is housed in a cell case (120) together with an electrolyte solution, wherein
the electrode assembly (110) and the cell case (120) have a structure in which both end parts at positions opposite to each other are together curved in the same direction so that a curved surface is formed on an outer surface of the battery cell, and
**characterized in that** at least one of the heat-fused outer circumferential sides (124, 125, 126) of the cell case (120) is curved to adhere to a curved surface while forming an inner surface.

2. The battery cell (100) of claim 1, wherein: the cell case (120) includes:
a first surface (122) forming an outer surface of a battery cell (100), a second surface (121) which is an opposite surface to the first surface (122), and side surfaces (123) between the first surface (122) and the second surface (121); and
outer circumferential sides (124, 125, 126) extending outward from the side surfaces and the second surface (121) for heat-fusion sealing, and
the electrode assembly (110) and the cell case (120) are curved in a direction of the second surface (121) and at least one of the outer circumferential sides (124, 125, 126) is curved to adhere to the second surface (121).

3. The battery cell (100) of claim 2, wherein: the outer circumferential sides (124, 125, 126) include:
a first outer circumferential side (126) on which at least one of a pair of electrode terminals (60, 70) of the electrode assembly (110) is located;
a pair of second outer circumferential sides (124, 125) extending in parallel with each other from both end parts of the first outer circumferential side (126); and
a third outer circumferential side extending between end parts of the second outer circumferential sides (124, 125) in parallel with the first outer circumferential side (126), and
the second outer circumferential sides (124, 125) have a structure curved together with the second surface (121) while being curved to adhere to the second surface (121) of the cell case (120).

4. The battery cell (100) of claim 3, wherein: when both end parts of the electrode assembly (110) and the cell case (120) are curved in the direction of the second surface (121), the second outer circumferential sides (124, 125) adhering to the second surface (121) does not generate a tension in an opposite direction to a direction in which the cell case (120) is bent.

5. The battery cell of claim 2, wherein: the outer circumferential sides (124, 125, 126) form an end part of the battery cell (100) as viewed form a plane.

6. The battery cell (100) of claim 2, wherein: the battery cell (100) includes:
a first curved surface (101) formed by a second surface (121) of a curved cell case and second outer circumferential sides (124, 125) adhering to the second surface (121);
a second curved surface (102) formed by the first surface (122) of the curved cell case; and
a pair of arched flat surfaces (103) formed by side surfaces (123) of the cell case (120) as viewed from a plane, and
a tension applied to the cell case (120) from the first curved surface (101) is 5% to 70% lower than that applied to the cell case by the second curved surface (102) and the flat surfaces.

7. The battery cell (100) of claim 3, wherein: the battery cell (100) has a structure in which the outer circumferential sides (124, 125, 126) are sealed while the electrode terminals (60, 70) of the electrode assembly (110) protrude in parallel through the first outer circumferential side (126) or the structure in which the outer circumferential sides (124, 125, 126) are sealed while the electrode terminals (60, 70) each protrude through the first outer circumferential side (126) and the third outer circumferential side.

8. The battery cell (100) of claim 3, wherein:
the end parts of the electrode assembly (110) corresponding to the first outer circumferential side (126) and the third outer circumferential side of the cell case (120) are curved in the direction of the second surface (121) of the cell case (120) corresponding to the first outer circumferential side (126) and the third outer circumferential side of the cell case (120).

9. The battery cell (100) of claim 8, wherein: the electrode assembly (110) and the cell case (120) are curved to be asymmetrical with each other with respect to the center (C) of the battery cell.

10. The battery cell (100) of claim 6, wherein: the battery cell (100) has a structure in which the electrode assembly (110) and the cell case (120) are curved together in a range of the curvature radius R of 10R to 200R.

11. The battery cell (100) of claim 10, wherein: the curvature radius R is an average of the first curvature radius R1 on the first curved surface (101) and the second curvature radius R2 on the second curved surface (102), with respect to the vertical cross section of the battery cell (100).

12. The battery cell (100) of claim 2, wherein: the cell case (120) has a plate-like reinforcing member (530) added to the second surface (121) to prevent the curved shape of the electrode assembly (110) from being changed, and
the reinforcing member (530) is curved in the direction of the second surface (121) together with the cell case (120).

13. The battery cell (100) of claim 12, wherein: the reinforcing member (530) is additionally added on at least one outer circumferential side (124, 125, 126) extending from the second surface (121), and
on the outer circumferential side (124, 125, 126) curved to adhere to the second surface (121), the reinforcing member (530) is curved in the direction of the second surface (121) together with the outer circumferential side (124, 125, 126).

14. A method for manufacturing the battery cell (100) of any one of claims 1 to 13, comprising:
(a) preparing a plate-shaped cell by mounting an electrode assembly (110) on a variable cell case and heat fusing outer circumferential sides (124, 125, 126) of the cell case (120) in a state in which an electrolyte solution is injected;
(b) horizontally bending and adhering a pair of second outer circumferential sides (124, 125) opposite to each other among the outer circumferential sides to a second surface (121) of the cell case (120);
(c) mounting and pressing the plate-shaped cell in upper and lower separated jigs in which a shape of the battery cell (100) having a curvature radius r smaller than a curvature radius R is stamped; and
(d) opening the jig to extract the battery cell (100) and then partially restoring a curved state to fix the battery cell (100) for a predetermined time so that the curvature radius R is formed.

15. A battery pack having a structure in which the battery cell (100) of claim 1 is mounted on an external material curved in the same shape as the battery cell (100).

## Patentansprüche

1. Batteriezelle (100), welche eine Struktur aufweist, in welcher äußere Umfangsseiten (124, 125, 126) eines Zellengehäuses durch Wärmefusion in einem Zustand abgedichtet sind, in welchem eine Elektrodenanordnung (110), welche eine Katode, eine Anode und einen Separator umfasst, in einem Zellengehäuse (120) zusammen mit einer Elektrolyt-Lösung aufgenommen ist, wobei
die Elektrodenanordnung (110) und das Zellengehäuse (120) eine Struktur aufweisen, in welcher beide Endteile an Positionen einander entgegengesetzt zusammen in der gleichen Richtung gekrümmt sind, so dass eine gekrümmte Fläche an einer äußeren Fläche der Batteriezelle gebildet ist, und
**dadurch gekennzeichnet, dass** wenigstens eine der wärmefusionierten äußeren Umfangsseiten (124, 125, 126) des Zellengehäuses (120) gekrümmt ist, um an einer gekrümmten Fläche anzuhaften, während eine innere Fläche gebildet wird.

2. Batteriezelle (100) nach Anspruch 1, wobei: das Zellengehäuse (120) umfasst:
eine erste Fläche (122), welche eine äußere Fläche einer Batteriezelle (100) bildet, eine zweite Fläche (121), welche eine zu der ersten Fläche (122) entgegengesetzte Fläche ist, und Seitenflächen (123) zwischen der ersten Fläche (122) und der zweiten Fläche (121); und
äußere Umfangsseiten (124, 125, 126), welche sich von den Seitenflächen und der zweiten Fläche (121) für eine Wärme-Fusion-Abdichtung nach außen erstrecken, und
wobei die Elektrodenanordnung (110) und das Zellengehäuse (120) in einer Richtung der zweiten Fläche (121) gekrümmt sind und wenigstens eine der äußeren Umfangsseiten (124, 125, 126) gekrümmt ist, um an der zweiten Fläche (121) anzuhaften.

3. Batteriezelle (100) nach Anspruch 2, wobei: die äußeren Umfangsseiten (124, 125, 126) umfassen:
eine erste äußere Umfangsseite (126), an welcher wenigstens ein Paar von Elektrodenanschlüssen (60, 70) der Elektrodenanordnung (110) angeordnet ist;
ein Paar von zweiten äußeren Umfangsseiten (124, 125), welche sich parallel zueinander von beiden Endteilen der ersten äußeren Umfangsseite (126) erstrecken; und
eine dritte äußere Umfangsseite, welche sich zwischen Endteilen der zweiten äußeren Umfangsseiten (124, 125) parallel zu der ersten äußeren Umfangsseite (126) erstreckt, und
wobei die zweiten äußeren Umfangsseiten (124, 125) eine Struktur aufweisen, welche zusammen mit der zweiten Fläche (121) gekrümmt ist, während sie gekrümmt ist, um an der zweiten Fläche (121) des Zellengehäuses (120) anzuhaften.

4. Batteriezelle (100) nach Anspruch 3, wobei: wenn beide Endteile der Elektrodenanordnung (110) und des Zellengehäuses (120) in der Richtung der zweiten Fläche (121) gekrümmt sind, die zweiten äußeren Umfangsseiten (124, 125), welche an der zweiten Fläche (121) anhaften, nicht eine Spannung in einer entgegengesetzten Richtung zu einer Richtung erzeugen, in welcher das Zellengehäuse (120) gebogen ist.

5. Batteriezelle nach Anspruch 2, wobei: die äußeren Umfangsseiten (124, 125, 126) einen Endteil der Batteriezelle (100) bilden, wenn aus einer Ebene betrachtet.

6. Batteriezelle (100) nach Anspruch 2, wobei: die Batteriezelle (100) umfasst:
eine erste gekrümmte Fläche (101), welche durch eine zweite Fläche (121) eines gekrümmten Zellengehäuses und zweite äußere Umfangsseiten (124, 125) gebildet ist, welche an der zweiten Fläche (121) anhaften;
eine zweite gekrümmte Fläche (102), welche durch die erste Fläche (122) des gekrümmten Zellengehäuses gebildet ist; und
ein Paar von bogenförmigen ebenen Flächen (103), welche durch Seitenflächen (123) des Zellengehäuses (120) gebildet sind, wenn aus einer Ebene betrachtet, und
wobei eine Spannung, welche auf das Zellengehäuse (120) von der ersten gekrümmten Fläche (101) ausgeübt wird, 5% bis 70% geringer ist als diejenige, welche auf das Zellengehäuse durch die zweite gekrümmte Fläche (102) und die ebenen Flächen ausgeübt wird.

7. Batteriezelle (100) nach Anspruch 3, wobei: die Batteriezelle (100) eine Struktur, in welcher die äußeren Umfangsseiten (124, 125, 126) abgedichtet sind, während die Elektrodenanschlüsse (60, 70) der Elektrodenanordnung (110) parallel durch die erste äußere Umfangsseite (126) vorstehen, oder die Struktur aufweist, in welcher die äußeren Umfangsseiten (124, 125, 126) abgedichtet sind, während die Elektrodenanschlüsse (60, 70) jeweils durch die erste äußere Umfangsseite (126) und die dritte äußere Umfangsseite vorstehen.

8. Batteriezelle (100) nach Anspruch 3, wobei:
die Endteile der Elektrodenanordnung (110), welche der ersten äußeren Umfangsseite (126) und der dritten äußeren Umfangsseite des Zellengehäuses (120) entsprechen, in der Richtung der zweiten Fläche (121) des Zellengehäuses (120) gekrümmt sind, welche der ersten äußeren Umfangsseite (126) und der dritten äußeren Umfangsseite des Zellengehäuses (120) entspricht.

9. Batteriezelle (100) nach Anspruch 8, wobei: die Elektrodenanordnung (110) und das Zellengehäuse (120) gekrümmt sind, zueinander in Bezug auf das Zentrum (C) der Batteriezelle asymmetrisch zu sein.

10. Batteriezelle (100) nach Anspruch 6, wobei: die Batteriezelle (100) eine Struktur aufweist, in welcher die Elektrodenanordnung (110) und das Zellengehäuse (120) miteinander in einem Bereich des Krümmungsradius R von 10R bis 200R gekrümmt sind.

11. Batteriezelle (100) nach Anspruch 10, wobei: der Krümmungsradius R ein Durchschnitt des ersten Krümmungsradius R1 an der ersten gekrümmten Fläche (101) und des zweiten Krümmungsradius R2 an der zweiten gekrümmten Fläche (102) in Bezug auf den vertikalen Querschnitt der Batteriezelle (100) ist.

12. Batteriezelle (100) nach Anspruch 2, wobei: das Zellengehäuse (120) ein plattenartiges Verstärkungselement (530) aufweist, welches zu der zweiten Fläche (121) hinzugefügt ist, um die gekrümmte Form der Elektrodenanordnung (110) davon abzuhalten, geändert zu werden, und
das Verstärkungselement (530) in der Richtung der zweiten Fläche (121) zusammen mit dem Zellengehäuse (120) gekrümmt ist.

13. Batteriezelle (100) nach Anspruch 12, wobei: das Verstärkungselement (530) zusätzlich an wenigstens einer äußeren Umfangsseite (124, 125, 126) hinzugefügt ist, welche sich von der zweiten Fläche (121) erstreckt, und
an der äußeren Umfangsseite (124, 125, 126), welche gekrümmt ist, um an der zweiten Fläche (121) anzuhaften, das Verstärkungselement (530) in der Richtung der zweiten Fläche (121) zusammen mit der äußeren Umfangsseite (124, 125, 126) gekrümmt ist.

14. Verfahren eines Herstellens der Batteriezelle (100) nach einem der Ansprüche 1 bis 13, umfassend:
(a) Vorbereiten einer plattenförmigen Zelle durch Anbringen einer Elektrodenanordnung (110) an einem variablen Zellengehäuse und Wärmefusionieren von äußeren Umfangsseiten (124, 125, 126) des Zellengehäuses (120) in einem Zustand, in welchem eine Elektrolyt-Lösung injiziert wird;
(b) horizontales Biegen und Anhaften eines Paares von zweiten äußeren Umfangsseiten (124, 125), welche unter den äußeren Umfangsseiten einander entgegengesetzt sind, an einer zweiten Fläche (121) des Zellengehäuses (120);
(c) Anbringen und Pressen der plattenförmigen Zelle in oberen und unteren separaten Matrizen, in welchen eine Form der Batteriezelle (100), welche einen Krümmungsradius r aufweist, welcher kleiner ist als ein Krümmungsradius R, pressgeformt wird; und
(d) Öffnen der Matrize, um die Batteriezelle (100) zu entnehmen und dann teilweise einen gekrümmten Zustand wiederherzustellen, um die Batteriezelle (100) für eine vorbestimmte Zeit zu befestigen, so dass der Krümmungsradius R gebildet wird.

15. Batteriepack, welcher eine Struktur aufweist, in welcher die Batteriezelle (100) nach Anspruch 1 an einem externen Material angebracht ist, welches in der gleichen Form wie die Batteriezelle (100) gekrümmt ist.

## Revendications

1. Élément de batterie (100) ayant une structure dans laquelle des côtés circonférentiels externes (124, 125, 126) d'un boîtier d'élément sont scellés par fusion thermique dans un état où un ensemble d'électrodes (110) comportant une cathode, une anode et un séparateur est logé dans un boîtier d'élément (120) conjointement avec une solution électrolytique, dans lequel
l'ensemble d'électrodes (110) et le boîtier d'élément (120) ont une structure dans laquelle les deux parties d'extrémité à des positions opposées l'une à l'autre sont incurvées ensemble dans la même direction de sorte qu'une surface incurvée soit formée sur une surface externe de l'élément de batterie, et
**caractérisé en ce qu'**au moins l'un des côtés circonférentiels externes fusionnés thermiquement (124, 125, 126) du boîtier d'élément (120) est incurvé pour adhérer à une surface incurvée tout en formant une surface interne.

2. Élément de batterie (100) selon la revendication 1, dans lequel : le boîtier d'élément (120) comporte :
une première surface (122) formant une surface externe d'un élément de batterie (100), une seconde surface (121) qui est une surface opposée à la première surface (122), et des surfaces de côté (123) entre la première surface (122) et la seconde surface (121) ; et
des côtés circonférentiels externes (124, 125, 126) s'étendant vers l'extérieur depuis les surfaces de côté et la seconde surface (121) pour un scellement par fusion thermique, et
l'ensemble d'électrodes (110) et le boîtier d'élément (120) sont incurvés dans une direction de la seconde surface (121) et au moins l'un des côtés circonférentiels externes (124, 125, 126) est incurvé pour adhérer à la seconde surface (121).

3. Élément de batterie (100) selon la revendication 2, dans lequel: les côtés circonférentiels externes (124, 125, 126) comportent :
un premier côté circonférentiel externe (126) sur lequel est située au moins l'une d'une paire de bornes d'électrode (60, 70) de l'ensemble d'électrodes (110) ;
une paire de deuxièmes côtés circonférentiels externes (124, 125) s'étendant en parallèle l'un à l'autre depuis les deux parties d'extrémité du premier côté circonférentiel externe (126) ; et
un troisième côté circonférentiel externe s'étendant entre des parties d'extrémité des deuxièmes côtés circonférentiels externes (124, 125) en parallèle avec le premier côté circonférentiel externe (126), et
les deuxièmes côtés circonférentiels externes (124, 125) ont une structure incurvée conjointement avec la seconde surface (121) tout en étant incurvée pour adhérer à la seconde surface (121) du boîtier d'élément (120).

4. Élément de batterie (100) selon la revendication 3, dans lequel : lorsque les deux parties d'extrémité de l'ensemble d'électrodes (110) et le boîtier d'élément (120) sont incurvés dans la direction de la seconde surface (121), l'adhérence des deuxièmes côtés circonférentiels externes (124, 125) à la seconde surface (121) ne génère pas de tension dans une direction opposée à une direction dans laquelle le boîtier d'élément (120) est cintré.

5. Élément de batterie selon la revendication 2, dans lequel : les côtés circonférentiels externes (124, 125, 126) forment une partie d'extrémité de l'élément de batterie (100) dans une vue en plan.

6. Élément de batterie (100) selon la revendication 2, dans lequel: l'élément de batterie (100) comporte :
une première surface incurvée (101) formée par une seconde surface (121) d'un boîtier d'élément incurvé et des deuxièmes côtés circonférentiels externes (124, 125) adhérant à la seconde surface (121) ;
une seconde surface incurvée (102) formée par la première surface (122) du boîtier d'élément incurvé ; et
une paire de surfaces plates arquées (103) formées par des surfaces de côté (123) du boîtier d'élément (120) dans une vue en plan, et
une tension appliquée au boîtier d'élément (120) depuis la première surface incurvée (101) est inférieure de 5 % à 70 % à celle appliquée au boîtier d'élément par la seconde surface incurvée (102) et les surfaces plates.

7. Élément de batterie (100) selon la revendication 3, dans lequel: l'élément de batterie (100) a une structure dans laquelle les côtés circonférentiels externes (124, 125, 126) sont scellés tandis que les bornes d'électrode (60, 70) de l'ensemble d'électrodes (110) font saillie en parallèle à travers le premier côté circonférentiel externe (126) ou la structure dans laquelle les côtés circonférentiels externes (124, 125, 126) sont scellés tandis que les bornes d'électrode (60, 70) font saillie chacune à travers le premier côté circonférentiel externe (126) et le troisième côté circonférentiel externe.

8. Élément de batterie (100) selon la revendication 3, dans lequel :
les parties d'extrémité de l'ensemble d'électrodes (110) correspondant au premier côté circonférentiel externe (126) et au troisième côté circonférentiel externe du boîtier d'élément (120) sont incurvées dans la direction de la seconde surface (121) du boîtier d'élément (120) correspondant au premier côté circonférentiel externe (126) et au troisième côté circonférentiel externe du boîtier d'élément (120).

9. Élément de batterie (100) selon la revendication 8, dans lequel : l'ensemble d'électrodes (110) et le boîtier d'élément (120) sont incurvés pour être asymétriques l'un avec l'autre par rapport au centre (C) de l'élément de batterie.

10. Élément de batterie (100) selon la revendication 6, dans lequel : l'élément de batterie (100) a une structure dans laquelle l'ensemble d'électrodes (110) et le boîtier d'élément (120) sont incurvés conjointement dans une plage de rayons de courbure R de 10R à 200R.

11. Élément de batterie (100) selon la revendication 10, dans lequel : le rayon de courbure R est une moyenne du premier rayon de courbure R1 sur la première surface incurvée (101) et du second rayon de courbure R2 sur la seconde surface incurvée (102), par rapport à la section transversale verticale de l'élément de batterie (100).

12. Élément de batterie (100) selon la revendication 2, dans lequel: le boîtier d'élément (120) a un organe de renforcement de type plaque (530) ajouté à la seconde surface (121) pour empêcher la forme incurvée de l'ensemble d'électrodes (110) de changer, et
l'organe de renforcement (530) est incurvé dans la direction de la seconde surface (121) conjointement avec le boîtier d'élément (120).

13. Élément de batterie (100) selon la revendication 12, dans lequel : l'organe de renforcement (530) est ajouté en outre sur au moins un côté circonférentiel externe (124, 125, 126) s'étendant depuis la seconde surface (121), et
sur le côté circonférentiel externe (124, 125, 126) incurvé pour adhérer à la seconde surface (121), l'organe de renforcement (530) est incurvé dans la direction de la seconde surface (121) conjointement avec le côté circonférentiel externe (124, 125, 126).

14. Procédé de fabrication de l'élément de batterie (100) de l'une quelconque des revendications 1 à 13, comprenant :
(a) la préparation d'un élément en forme de plaque par montage d'un ensemble d'électrodes (110) sur un boîtier d'élément variable et fusion thermique de côtés circonférentiels externes (124, 125, 126) du boîtier d'élément (120) dans un état où une solution électrolytique est injectée ;
(b) le cintrage horizontal et la mise à adhérer d'une paire de deuxièmes côtés circonférentiels externes (124, 125) opposés l'un à l'autre parmi les côtés circonférentiels externes à une seconde surface (121) du boîtier d'élément (120) ;
(c) le montage et l'enfoncement de l'élément en forme de plaque dans des gabarits séparés supérieur et inférieur dans lesquels une forme de l'élément de batterie (100) ayant un rayon de courbure r inférieur à un rayon de courbure R est estampée ; et
(d) l'ouverture du gabarit pour extraire l'élément de batterie (100), puis la restauration partielle d'un état incurvé pour fixer l'élément de batterie (100) pendant un temps prédéterminé de sorte que le rayon de courbure R soit formé.

15. Bloc-batterie ayant une structure dans laquelle l'élément de batterie (100) de la revendication 1 est monté sur un matériau externe incurvé selon la même forme que l'élément de batterie (100).
